# EUROPEAN PATENT APPLICATION

(11) **EP 4 647 888 A1**
(43) Date of publication of application: **12.11.2025**
(21) Application number: 24218325.9
(22) Date of filing: 09.12.2024
(51) Int. Cl.: G06F 3/06, G06F 12/02

(54) **MEMORY CONTROLLER FOR ENSURING WRITE PERFORMANCE, STORAGE APPARATUS HAVING THE SAME, AND OPERATION METHOD THEREOF**

(30) Priority: 10.05.2024 KR 20240061926
(71) Applicant: SK hynix Inc., Bubal-eub Icheon-si Gyeonggi-do 17336 (KR)
(72) Inventor: HAN, Hyo Byung, 17336 Icheon-si, Gyeonggi-do (KR); JANG, Hyoung Suk, 17336 Icheon-si, Gyeonggi-do (KR); CHOI, Young Wu, 17336 Icheon-si, Gyeonggi-do (KR); HA, Byung Min, 17336 Icheon-si, Gyeonggi-do (KR)
(74) Representative: Isarpatent

(57) **Abstract**

A memory controller controls a storage medium including a first memory region and a second memory region, each of which has a plurality of memory blocks. The memory controller is configured to close an open block in the second memory region when a background operation is performed. The memory controller is configured to move data of at least one victim block of the first memory region and the second memory region, and erase the at least one victim block to generate at least one free block.

## Description

### BACKGROUND

### 1. Technical Field

Various embodiments of the present disclosure may generally relate to a semiconductor integrated apparatus, and more particularly, to a memory controller for ensuring write performance, a storage apparatus having the same, and an operation method thereof.

### 2. Related Art

A storage apparatus is coupled to an external apparatus and performs a data input and output (input/output) operation according to a request of the external apparatus. The storage apparatus may use various storage media to store data. For example, the storage apparatus may adopt, as the storage media, a nonvolatile memory device such as a flash memory device.

To enhance the performance of the storage apparatus, a programming method, which primarily programs data in a high-speed program region and then programs the primarily programmed data in a high-density program region may be used.

It is important to ensure allocation of a high-speed program region to implement the desired write performance in such a programming method.

### SUMMARY

In an embodiment of the present disclosure, a memory controller may control a storage medium including a first memory region and a second memory region each of which has a plurality of memory blocks. The memory controller may include a background operation manager configured to determine an open block in the second memory region when a background operation is triggered, move data of at least one victim block to the determined open block to close the open block, the at least one victim block selected from at least one of the first memory region and the second memory region, and erase the at least one victim block to generate at least one free block, and a processor configured to provide the at least one free block as a write block in response to a write request.

In an embodiment of the present disclosure, a memory controller may control a storage medium including a first memory region and a second memory region, each of which has a plurality of memory blocks. The memory controller may include a processor configured to primarily program write data in a first memory block, which is in a free state, selected from the first memory region in response to a write request; and a background operation manager configured to, in a background operation mode, select a second memory block, which is in an open state, from the second memory region, program background data to the determined open block to close the open block, the at least one victim block detected from at least one of the first memory region and the second memory region, and generate, as a free block, a memory block in which the background data was detected.

In an embodiment of the present disclosure, a storage apparatus may include a storage medium and a memory controller. The storage medium may include a first memory region and a second memory region, each of which has a plurality of memory blocks. The memory controller may be configured to, in a background operation, determine an open block in the second memory region, move data of at least one victim block to the determined open block to close the open block, the at least one victim block selected from at least one of the first memory region and the second memory region, erase the at least one victim block to generate at least one free block, and provide the at least one free block as a write block in response to a write request.

In an embodiment of the present disclosure, an operating method of a memory controller which controls a storage medium including a first memory region and a second memory region, each of which has a plurality of memory blocks, the method may include determining an open block in the second memory region when a background operation is triggered; moving data of at least one victim block to the determined open block, the at least one victim block selected from at least one of the first memory region and the second memory region; converting the open block to a closed state, erasing the at least one victim block to generate at least one free block; and providing the at least one free block as a write block in response to a write request.

According to the present technology, in a background operation for ensuring a free block, a high-density program region may be converted from an opened state into a close state, and a write request after the background operation may be processed by allocating a high-speed program region.

Accordingly, the write request may be processed in high-speed to enhance performance of a storage apparatus.

These and other features, aspects, and embodiments are described in more detail below.

### BRIEF DESCRIPTION OF THE DRAWINGS

The above and other aspects, features and advantages of the subject matter of the present disclosure will be more clearly understood from the following detailed description taken in conjunction with the accompanying drawings, in which:
FIG. 1 is a diagram illustrating a configuration of a data processing system according to an embodiment of the present disclosure;
FIG. 2 is a diagram illustrating a configuration of a nonvolatile memory device according to an embodiment of the present disclosure;
FIG. 3 is a diagram illustrating a configuration of a nonvolatile memory device according to an embodiment of the present disclosure;
FIG. 4 is a diagram illustrating a configuration of a memory controller according to an embodiment of the present disclosure;
FIG. 5 is a flowchart for describing an operating method of a memory controller according to an embodiment of the present disclosure;
FIG. 6 is a flowchart for describing an operating method of a memory controller according to an embodiment of the present disclosure; and
FIGS. 7 to 9 are conceptual diagrams for describing an operating method of a memory controller according to an embodiment of the present disclosure.

### DETAILED DESCRIPTION

Various embodiments of the present disclosure are described in detail with reference to the accompanying drawings. The drawings are schematic illustrations of various embodiments and intermediate structures. As such, variations from the configurations and shapes of the illustrations as a result, for example, of manufacturing techniques and/or tolerances, are to be expected. Thus, the described embodiments should not be construed as being limited to the particular configurations and shapes illustrated herein but may include deviations in configurations and shapes which do not depart from the spirit and scope of the present disclosure as defined in the appended claims.

Embodiments of the present disclosure are described herein with reference to cross-section and/or plan illustrations of various embodiments of the present disclosure. However, the embodiments of the present disclosure should not be construed as limiting the scope of the present disclosure. Although a few embodiments of the present teachings are shown and described, it will be appreciated by those of ordinary skill in the art that changes may be made in these embodiments without departing from the principles and spirit of the present disclosure.

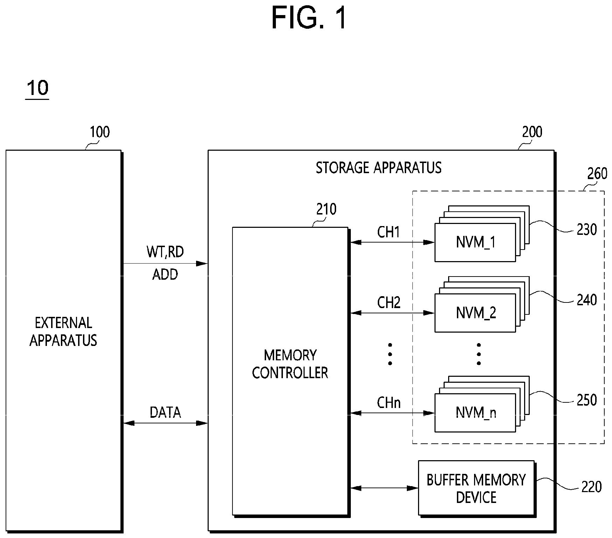

FIG. 1 is a diagram illustrating a data processing system 10 according to an embodiment of the present disclosure.

Referring to FIG. 1, the data processing system 10 includes an external apparatus 100 and a storage apparatus 200.

The external apparatus 100 may include at least one processor. For example, the external apparatus 100 is a processor itself. In another embodiment, the external apparatus 100 is an electronic apparatus including the processor or an electronic system including the processor. The external apparatus 100 may operate as a host apparatus for the storage apparatus 200.

The storage apparatus 200 includes a memory controller 210, a buffer memory device 220, and a storage medium 260. The storage medium 260 includes at least a plurality of nonvolatile memory devices (NVM1, NVM2, ..., NVMn) 230, 240, and 250.

The external apparatus 100 transmits, to the storage apparatus 200, a write request including a write command WT, an address ADD, and write data DATA. In response to the write request, the storage apparatus 200 operates to program the write data DATA in the storage medium 260.

The external apparatus 100 transmits, to the storage apparatus 200, a read request including a read command RD and an address ADD. The storage apparatus 200 reads read-requested data DATA from the storage medium 260 and transmits the read data DATA to the external apparatus 100.

The storage apparatus 200 may read data from the storage medium 260 or write data in the storage medium 260 according to the read or write request. For example, the storage apparatus 200 reads/writes the data from/in the storage medium 260 according to the read/write request of the external apparatus 100. In another embodiment, the storage apparatus 200 internally generates the read/write request to perform an internal management operation for managing the storage medium 260 and reads/writes the data from/in the storage medium 260 according to the internally generated read/write request. The internal management operation may include a house-keeping operation, such as a wear-leveling operation, a garbage collection operation, and a read reclaim operation, which is performed without a request of the external apparatus 100 to use a storage space of the storage medium 260 efficiently or to ensure reliability of data stored in the storage medium 260.

The storage medium 260 is coupled to the memory controller 210 through at least one channel CH1 to CLn. In an embodiment, the nonvolatile memory devices 230 to 250 include at least one of various types of nonvolatile memory devices such as a NAND flash memory device, a NOR flash memory device, a ferroelectric RAM (FRAM) using a ferroelectric capacitor, a magnetic RAM (MRAM) using a tunneling magneto-resistive (TMR) layer, a phase-change RAM (PRAM) using a chalcogenide alloy, and a resistive RAM (ReRAM) using a transition metal oxide.

Each of the nonvolatile memory devices 230 to 250 may include a plurality of memory cells. Each of the memory cells may operate as a single level cell (SLC) which stores 1-bit data or a multi-level cell (MLC) which stores 2-bit or more data.

For example, each of the nonvolatile memory devices 230 to 250 is configured to operate as an SLC memory device or an MLC memory device. In another example, portions of the nonvolatile memory devices 230 to 250 are configured to operate as SLC memory devices, and the remaining nonvolatile memory devices are configured to operate as MLC memory devices.

The buffer memory device 220 temporarily stores data transmitted and received between the external apparatus 100 and the storage apparatus 200 or maps data in a write or read operation. The map data is mapping information between an address (physical address) of a physical storage space constituting the storage medium 260 and a logical address assigned to the storage medium 260 by the external apparatus 100.

The map data may be stored in the storage medium 260. The memory controller 210 may at least partially load and use the map data required for the operation of the storage apparatus 200 into the buffer memory device 220.

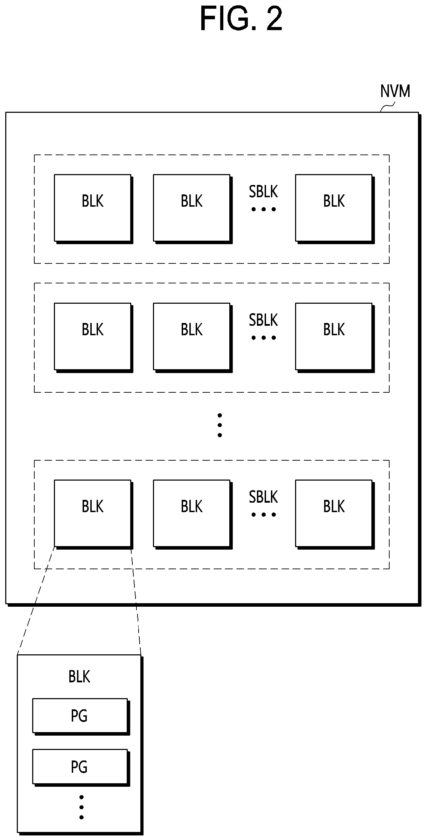

FIG. 2 is a diagram illustrating a configuration of a nonvolatile memory device NVM according to an embodiment of the present disclosure.

Referring to FIG. 2, the nonvolatile memory device NVM includes a plurality of memory blocks BLK. Each of the plurality of memory blocks BLK includes a plurality of pages PG.

The memory controller 210 of FIG. 1 may group the plurality of memory blocks BLK included in the nonvolatile memory device NVM into a plurality of super memory blocks SBLK. Each of the plurality of super memory blocks SBLK may include one or more memory blocks among the plurality of memory blocks BLK included in the nonvolatile memory block NVM.

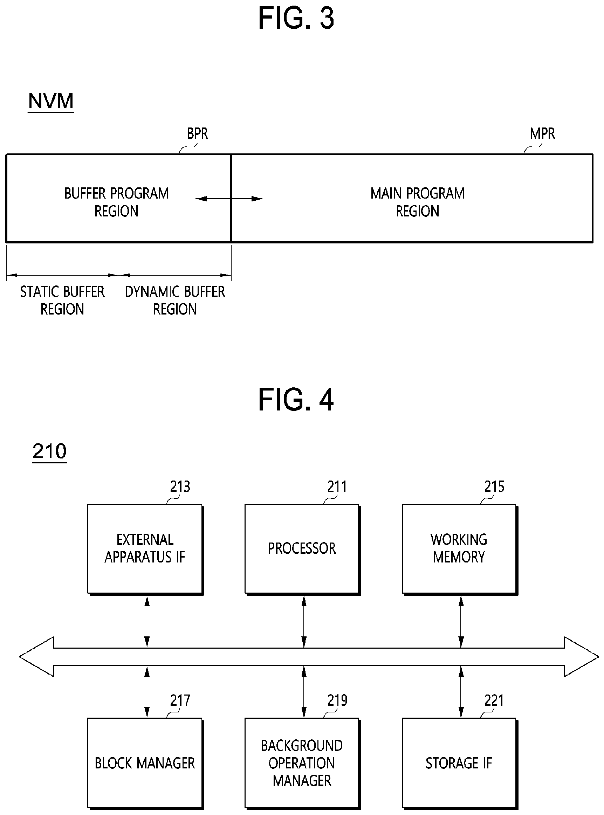

FIG. 3 is a diagram illustrating a configuration of a nonvolatile memory device NVM according to an embodiment of the present disclosure.

Referring to FIG. 3, the nonvolatile memory device NVM is divided into a buffer program region BPR as a first memory region including a plurality of memory blocks, and a main program region MPR as a second memory region including a plurality of memory blocks.

The memory controller 210 may process the write request of the external apparatus 100 at high speed using a high-speed programming method. According to the high-speed programming method, the memory controller 210 primarily programs data write-requested by the external apparatus 100 in the buffer program region BPR, transmits a write complete signal to the external apparatus 100, and then secondarily programs in the main program region MPR the data primarily programmed in the buffer program region BPR.

In an embodiment, the buffer program region BPR may include a high-speed program region having program speed faster than the main program region MPR. The buffer program region BPR may operate to store n-bit data in one memory cell, where n is a natural number greater than or equal to 1. For example, each of the memory cells of the buffer program region BPR operates as an SLC.

The main program region MPR may be a high-density program region which operates to store k-bit data in one memory cell, where k is a natural number greater than n. For example, each of the memory cells of the main program region MPR operates as an MLC.

In an embodiment, the buffer program region BPR includes a static buffer region and a dynamic buffer region.

The static buffer region may include a region of the storage space of the nonvolatile memory device NVM which is fixedly allocated to perform buffer programming.

The dynamic buffer region may include a region which is convertible between the main program region MPR and the buffer program region BPR. For example, when the number of empty blocks of the static buffer region is less than or equal to a preset threshold value, a portion of the main program region MPR may be allocated as the dynamic buffer program region BPR. When the number of empty blocks of the static buffer region is greater than the preset threshold value, the dynamic buffer region may be recovered from the buffer program region BPR to the main program region MPR. However, the embodiments are not limited thereto.

When both the static and dynamic buffer regions are fully filled with data, the write data may be programmed in the main program region MPR not via the buffer program region BPR. Accordingly, when the write request is processed through the high-speed programming method, the nonvolatile memory device NVM may operate with the write performance corresponding to the write speed of the buffer program region BPR before the buffer program region BPR is fully filled. Further, the nonvolatile memory device NVM may operate with the write performance corresponding to the write speed of the main program region MPR after the buffer program region is fully filled.

Accordingly, to provide the write performance corresponding to the write speed of the buffer program region BPR, it is necessary to ensure an empty space of the buffer program region BPR through movement of data of the buffer program region BPR to the main program region MPR.

FIG. 4 is a diagram illustrating a configuration of a memory controller 210 according to an embodiment of the present disclosure.

Referring to FIG. 4, the memory controller 210 includes a processor 211, an external apparatus interface (IF) 213, a working memory 215, a block manager 217, a background operation manager 219, and a storage IF 221.

The processor 211 may be configured to operate as firmware or software provided for various operations of the memory controller 210 executed on hardware. The processor 211 may be implemented in a combined form of hardware and firmware or software which operates on the hardware. In an embodiment, the processor 211 performs a function of a flash translation layer FTL, which manages the storage apparatus 200.

The external apparatus IF 213 may receive a command and a clock signal from the external apparatus 100 according to control of the processor 211, and provide a communication channel for controlling input and output of data. In particular, the external apparatus IF 213 may provide a physical connection between the external apparatus 100 and the storage apparatus 200.

In an embodiment, the external apparatus IF 213 may communicate with the external apparatus 100 based on an interface using at least one of various communication interfaces or standards such as a universal serial bus (USB) protocol, a multimedia card (MMC) protocol, a peripheral component interconnection (PCI) protocol, a PCI-express (PCI-e or PCIe) protocol, an advanced technology attachment (ATA) protocol, a serial advanced technology attachment (SATA) protocol, a parallel advanced technology attachment (PATA) protocol, a small computer system interface (SCSI) protocol, an enhanced small disk interface (ESDI) protocol, an integrated drive electronics (IDE) protocol, a private protocol, a system management bus (SMBus) protocol, an inter-integrated Circuit (I2C) protocol, and an improved inter-integrated circuit (I3C) protocol.

The external apparatus IF 213 may store, in the buffer memory device 220, the write data provided from the external apparatus 100 according to control of the processor 211. The external apparatus IF 213 may provide, to the external apparatus 100, the read data, which is read from the storage medium 260 and stored in the buffer memory device 220.

The working memory 215 may be configured of a random access memory (RAM) device such as a dynamic RAM (DRAM) or a static RAM (SRAM). The working memory 215 may store firmware driven by the processor 211. Further, the working memory 215 may store data required for driving of the firmware, for example, metadata. The metadata may include system information or an attribute corresponding to a memory block. The metadata may be stored in a specific page of a memory block. The processor 211 may load and use the metadata required for an operation of the storage apparatus 200 into the working memory 215.

Further, the working memory 215 may operate as a buffer memory which stores the write data provided from the external apparatus 100, the read data read from the storage medium 260, or the mapdata.

The block manager 217 may manage states of the plurality of memory blocks constituting each of the nonvolatile memory devices 230 to 250 of the storage medium 260. In an embodiment, the block manager 217 is configured to store, in set regions of the nonvolatile memory devices 230 to 250, block allocation information, block meta information, and mapping information. The block meta information includes an attribute, a valid page number, a page offset, and an access count for each block. The mapping information may include information indicating mapping between a logical address and a physical address. Further, the block manager 217 is configured to update and delete the block allocation information, the block meta information, and the mapping information, which are stored in set regions of the nonvolatile memory devices 230 to 250.

The attribute of the block may include information indicating the state of the block. For example, the attribute of the block includes information indicating whether the block is an open block, a closed block, a free block, or a bad block.

The open block may refer to a memory block, which is in use, allocated to process the write request. The closed block may refer to a block having no empty space in which data is to be stored or a block which is set so as not to store data. The free block may refer to an empty block in which data can be stored. The bad block may refer to an unavailable block.

The valid page number of the block may be information indicating the number of valid pages in which valid data are stored, among the pages included in each block.

The page offset may refer to offset information of a page in which data is to be written next in a corresponding block.

The background operation manager 219 may trigger the background operation and process the triggered background operation according to control of the processor 211.

The background operation may include wear-leveling, garbage collection, read reclaim, and the like. In an embodiment, the background operation is triggered when a request is not received from the external apparatus 100 for a set time and thus the storage apparatus 200 is switched to an idle mode.

The storage IF 221 may provide a communication channel for signal transmission/reception between the memory controller 210 and the storage medium 260. The storage IF 221 may write, in the storage medium 260, data temporarily stored in the buffer memory device 220 according to control of the processor 211. The storage IF 221 may transmit, to the buffer memory device 220, read data read from the storage medium 260 according to control of the processor 221 such that the read data is to be temporarily stored therein.

The memory controller 210 may support the high-speed programming mode. In the high-speed programming mode, as the external apparatus 100 transmits the write data and the write command, the memory controller 210 may buffer the write data in the buffer memory device 220 and primarily programs the buffered write data in the buffer program region BPR as the first memory region. For example, the memory controller 210 primarily programs the buffered write data in at least one open memory block included in the buffer program region BPR. In another embodiment, the memory controller 210 opens at least one memory block included in the buffer program region BPR and primarily programs the buffered write data in the at least one opened memory block. Then, the memory controller 210 secondarily programs, in the main program region MPR as the second memory region, the write data, which are primarily programmed in the memory block of the buffer program region BPR,. For example, the memory controller 210 secondarily programs the primarily programmed write data in at least one open memory block included in the main program region MPR. In another embodiment, the memory controller 210 opens at least one memory block included in the main program region MPR and secondarily programs the primarily programmed write data in the at least one opened memory block.

A case where the buffer program region BPR is fully filled with data and thus the buffer program region BPR cannot be opened may be considered. In such a case, the memory controller 210 may program the write data without the primary programming process. For example, the memory controller 210 programs the write data in at least one open memory block (hereinafter, referred to as "high-density user open block") included in the main program region MPR without the primary programming process. In another embodiment, the memory controller 210 opens at least one memory block included in the main program region MPR, converts the at least one opened memory block into the high-density user open block, and programs the write data in the high-density user open block without the primary programming process. In this case, the storage apparatus 200 may operate with the write performance corresponding to the write speed of the main program region MPR.

To provide performance through the high-speed programming mode, for example, performance corresponding to the write speed of the buffer program region BPR, the memory controller 210 may generate a free block at least in the buffer program region BPR through the background operation such as garbage collection and read reclaim. For example, the memory controller 210 generates the free block in the static buffer region and/or the dynamic buffer region of the buffer program region BPR through the background operation. In another embodiment, the memory controller 210 generates at least one free block of the main program region MPR and converts the generated free block to the dynamic buffer region.

After the memory controller 210 generates the free block in the buffer program region BPR through the process of generating the free block in the static buffer region or the dynamic buffer region, or the process of converting the free block generated from the main program region MPR into the dynamic buffer region, the memory controller 210 may receive the write request from the external apparatus 100. The memory controller 210 may program the write data of the external apparatus 100 in the memory block of the open state. At this time, when the high-density user open block exists, the write data is programmed in the high-density user open block even though the free block exists in the buffer program region BPR. Thus, it is difficult to expect the performance provided in the high-speed programming mode.

According to the embodiments of the present disclosure, when the memory controller 210 performs the background operation for ensuring the free block through entering of the idle mode of the storage apparatus 200, the memory controller 210 may generate the free block in the buffer program region BPR to close the high-density user open block. Accordingly, when the storage apparatus 200 receives the write request from the external apparatus 100 and is switched into the activation mode, the memory controller 210 may allocate the free block among the memory blocks (hereinafter, referred to as "high-speed memory blocks") of the buffer program region BPR and perform the high-speed program operation.

In an embodiment, when the memory controller 210 enters the idle mode and performs the background operation, for example, the garbage collection, in a case where the high-density user open block exists, the memory controller 210 may move the valid data of the victim block into the high-density user open block as a target block and close the high-density user open block.

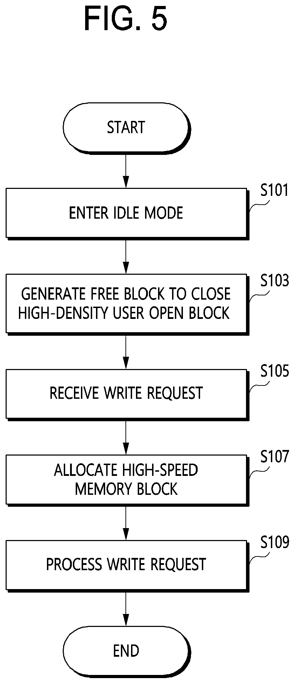

FIG. 5 is a flowchart for describing an operating method of a memory controller according to an embodiment of the present disclosure.

Referring to FIG. 5, when a set condition is satisfied, for example, when a service request is not received from the external apparatus 100 for a set time, the memory controller 210 according to an embodiment enters the idle mode (S101).

In the idle mode, the memory controller 210 may perform the background operation, for example, the operation which generates the free block in the buffer program region BPR. The free block generation operation may include a garbage collection operation, a read reclaim operation, and the like.

When the high-density user open block exists in the background operation, the memory controller 210 may perform the background operation to generate the free block to close the high-density user open block (S103). In an embodiment, by performing the background operation in the idle mode, the memory controller 210 may move data of a victim block selected from at least one of the buffer program region BPR and the main program region MPR to the high-density user open block to generate the free block, and convert all high-density user open blocks into the close state. The victim block selected from the main program region MPR becomes the free block and then is converted into the dynamic buffer region of the buffer program region BPR.

Next, when the write request is received from the external apparatus 100 (S105), the memory controller 210 allocates the free block among the high-speed memory blocks as the write block (S107) and processes the write request (S109).

As described above, when the garbage collection is triggered, in a case where the high-density user open block exists, an embodiment of the present disclosure moves the valid data of the victim block to the high-density user open block and closes the high-density user open block. Then, in response to the write request, the embodiments of the present disclosure allocate the high-speed memory block as the write block, primarily programs the write data in the high-speed memory block, and secondarily programs the write data in the high-density memory block again. Therefore, the write performance supported in the high-speed program mode can be guaranteed.

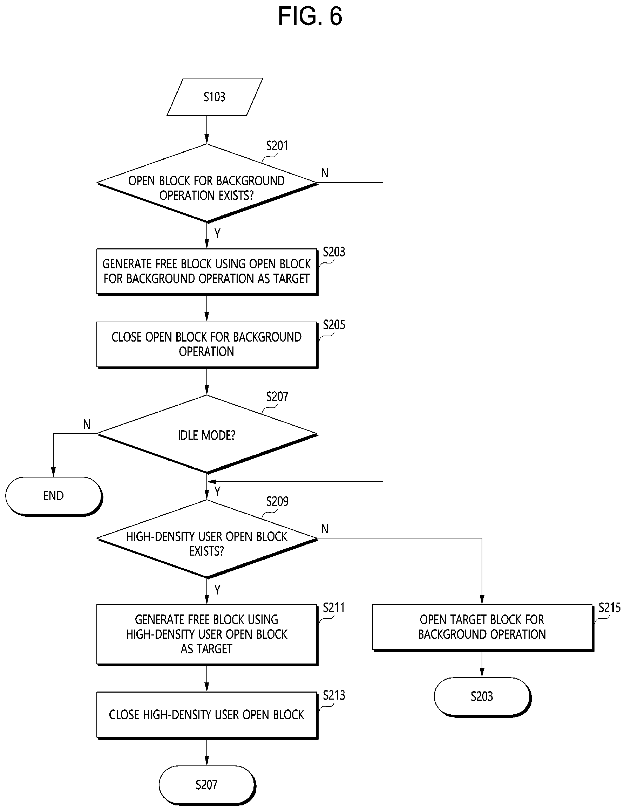

FIG. 6 is a flowchart for describing an operating method of a memory controller according to an embodiment of the present disclosure, wherein FIG. 6 illustrates an example of the free block generation process S103 of FIG. 5.

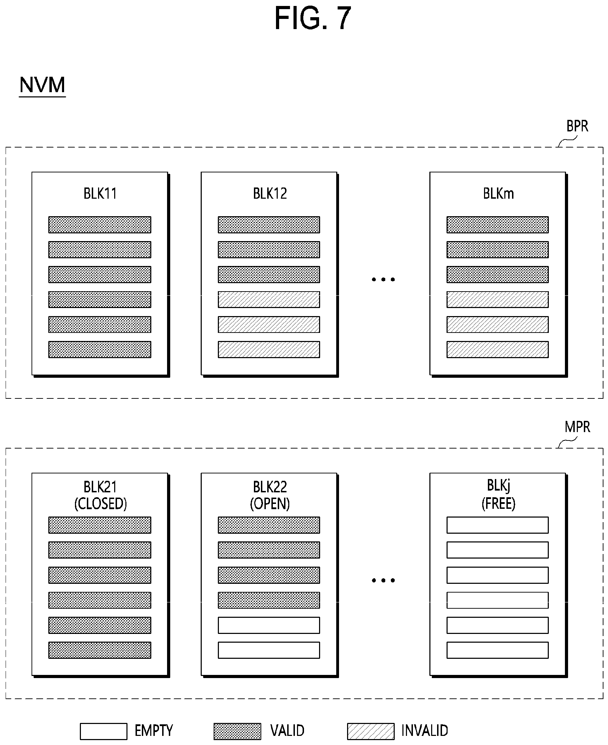

FIGS. 7 to 9 are conceptual diagrams for describing an operating method of a memory controller according to an embodiment of the present disclosure. The operating method of FIG. 6 will be described with reference to FIGS. 7 to 9.

Referring to FIG. 6, as the storage apparatus 200 enters the idle mode, the memory controller 210 triggers the background operation and determines whether or not a pre-allocated open block (open block for the background operation) exists to process the background operation (S201).

When it is determined that the open block for the background operation exists (S201 :Y), the memory controller 210 generates a free block in at least one of the buffer program region BPR and the main program region MPR using the open block for the background operation as a target block (S203).

In an embodiment, the background operation may include the garbage collection operation. The memory controller 210 selects at least one victim block from at least one of the buffer program region BPR and the main program region MPR, moves the valid data of the victim block to the open block for the background operation, and erases the victim block to generate the free block.

When the open block for the background operation is filled with the valid data, the memory controller 210 converts the open block into a closed state (S205), and determines whether or not the storage apparatus 200 is in the idle mode (S207).

FIG. 7 is an illustrative diagram illustrating a state of the nonvolatile memory device NVM before the storage apparatus 200 enters the idle mode.

Referring to FIG. 7, the buffer program region BPR as the first memory region includes a plurality of high-speed memory blocks BLK11, BLK12, ..., BLKm, and pages PG of each of the high-speed memory blocks BLK11, BLK12, ..., BLKm are filled with the valid data or the invalid data.

The main program region MPR as the second memory region includes a plurality of high-density memory blocks BLK21, BLK22, ..., BLKj. Specifically, the main program region MPR includes a closed block BLK21, an open block BLK22, and a free block BLKj.

In a case where the nonvolatile memory device NVM has a state as shown in FIG. 7, when the write request is received, the memory controller 210 controls the write data to be programmed in the open block of the nonvolatile memory device NVM, for example, the high-density user open block BLK22. That is, the memory controller 210 cannot controls the write data to be primarily programmed in the high-speed memory block of the nonvolatile memory device NVM. Thus, the performance, which is expected through the high-speed program mode, cannot be provided.

Accordingly, the memory controller 210 performs the operation, which generates the free block in the buffer program region BPR, to close the high-density user open block BLK22.

Referring back to FIG. 6, when it is determined that the storage apparatus 200 is in the idle mode (S207:Y) after the open block for the background operation is closed, the memory controller 210 determines whether or not the high-density user open block exists (S209).

When it is determined that the high-density user open block exists (S209:Y), the memory controller 210 generates the free block using the high-density user open block as the target block (S211).

In an embodiment, the background operation includes the garbage collection operation. The memory controller 210 selects at least one victim block from at least one program region, e.g., from the buffer program region BPR, moves the valid data of the victim block to the high-density user open block, and erases the victim block to generate the free block. The victim block is at least one memory block included in the buffer program region BPR and/or the main program region MPR.

When the high-density user open block is filled with the valid data, the memory controller 210 converts the high-density user open block into the closed state (S213) and proceeds to determine whether or not the storage apparatus 200 is in the idle mode (S207).

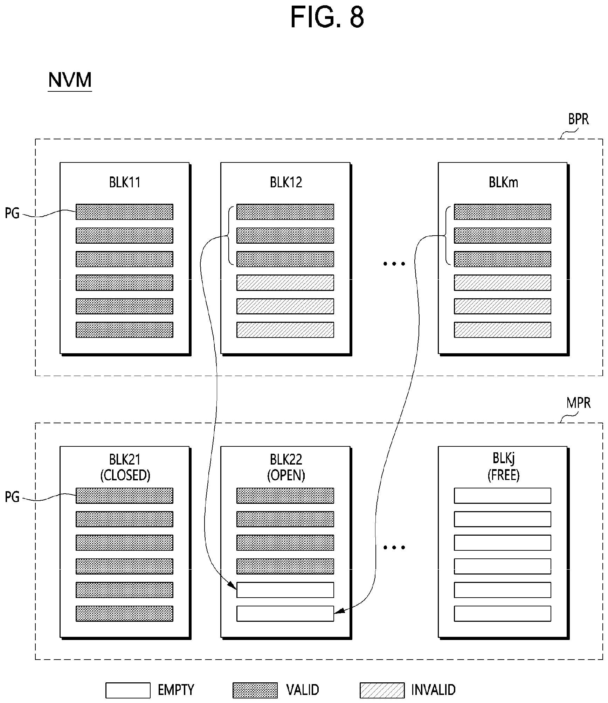

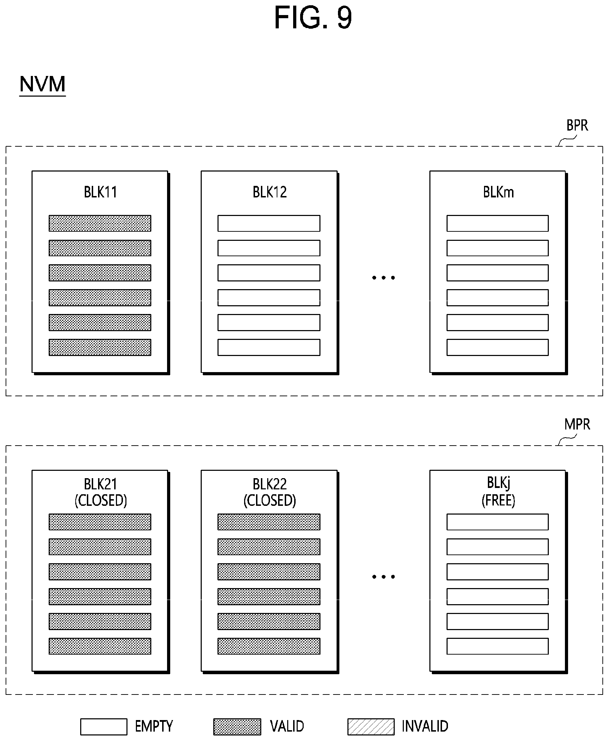

FIGS. 8 and 9 are diagrams for describing generating a free block using a high-density user open block as a target block.

Referring to FIG. 8, at least one victim block may be selected from the buffer program region BPR. In an embodiment, the victim block may be selected in ascending order of the valid data number. In the illustrated example of FIG. 8, the block BLK12 and the block BLKm are selected as the victim blocks.

The memory controller 210 selects, as the target block, the high-density user open block BLK22, which is in an open state during the background operation processing. The memory controller 210 programs the valid data of the victim blocks BLK12 and BLKm in the target block BLK22.

Referring to FIG. 9, the memory controller 210 erases the victim blocks BLK12 and BLKm to generate the free blocks and converts the target block BLK22 to the closed state.

Accordingly, the memory controller 210 primarily programs the write data in at least one of the free blocks BLK12 and BLKm included in the high-speed memory block of the buffer program region BPR in response to the write request received after the background operation.

Referring back to FIG. 6, when it is determined that the open block for the background operation does not exists (S201 :N), the memory controller 210 determines whether or not the high-density user open block exists (S209).

When it is determined that the high-density user open block does not exist (S209:N), the memory controller 210 opens a target block for the background operation (S215) and proceeds to operation S203 of generating the free block using the target block.

When it is determined that the storage apparatus 200 is no longer in the idle mode (S207:N), the memory controller 210 terminates the free block generation process.

In the storage apparatus 200 which provides the high-speed program mode, the background operation may be performed in a state that the high-density memory block is opened after the high-speed memory region is fully filled with data. In this case, even though the sufficient idle time is provided, the high-density user open block is allocated as the write target block after the idle mode, and thus the desired write performance cannot be provided.

In the embodiments of the present disclosure, in the background operation after the high-speed memory device is fully filled, the background operation is performed using the high-density user open block as the target block, and thus the high-density user open block is closed. Accordingly, the consumption amount of the free block for the background operation can be reduced, and the write operation is processed at high-speed by allocating the high-speed memory block as the target write block after the idle mode terminated.

The above described embodiments of the present disclosure are intended to illustrate and not to limit the scope of the present disclosure. Various alternatives and equivalents are possible. The invention is not limited by the embodiments described herein. Nor is the invention limited to any specific type of semiconductor device. Other additions, subtractions, or modifications which are apparent in view of the present disclosure are intended to fall within the scope of the appended claims. Furthermore, the embodiments may be combined to form additional embodiments.

## Claims

1. A memory controller which controls a storage medium including a first memory region and a second memory region, each of which has a plurality of memory blocks, the memory controller comprising:
a background operation manager configured to determine an open block in the second memory region when a background operation is triggered, move data of at least one victim block to the determined open block to close the open block, the at least one victim block selected from at least one of the first memory region and the second memory region, and erase the at least one victim block to generate at least one free block, and
a processor configured to provide the at least one free block as a write block in response to a write request.

2. The memory controller of claim 1, wherein the write request includes write data, the at least one victim block is selected from the first memory region, and the memory controller is configured to, in response to the write request, primarily program the write data in the write block of the first memory region and secondarily program, in the second memory region, the write data primarily programmed in the first memory region.

3. The memory controller of claim 1, wherein the background operation includes at least one of a garbage collection operation and a read reclaim operation.

4. The memory controller of claim 1, wherein the first memory region supports a first program speed, and
the second memory region supports a second program speed slower than the first program speed.

5. The memory controller of claim 1, wherein the first memory region is controlled to operate to store n-bit data in one memory cell, where n is a natural number greater than or equal to 1, and
the second memory region is controlled to operate to store k-bit data in one memory cell, where k is a natural number greater than or equal to 2.

6. A memory controller which controls a storage medium including a first memory region and a second memory region, each of which has a plurality of memory blocks, the memory controller comprising:
a processor configured to primarily program write data in a first memory block, which is a free block, selected from the first memory region in response to a write request; and
a background operation manager configured to, in a background operation mode, select a second memory block, which is in an open state, from the second memory region,
program background data in the selected second memory block to close the second memory block, the background data detected from at least one of the first memory region and the second memory region, and
generate, as a free block, a memory block in which the background data was detected.

7. The memory controller of claim 6, wherein the processor is configured to secondarily program, in a memory block selected from the second memory region, the write data primarily programmed in the first memory block.

8. The memory controller of claim 6, wherein the first memory region is controlled to operate to store n-bit data in one memory cell, where n is a natural number greater than or equal to 1, and
the second memory region is controlled to operate to store k-bit data in one memory cell, where k is a natural number greater than or equal to 2.

9. A storage apparatus comprising:
a storage medium including a first memory region and a second memory region, each of which has a plurality of memory blocks; and
a memory controller configured to, in a background operation, determine an open block in the second memory region,
move data of at least one victim block to the determined open block to close the open block, the at least one victim block selected from at least one of the first memory region and the second memory region,
erase the at least one victim block to generate at least one free block, and
provide the at least one free block as a write block in response to a write request.

10. The storage apparatus of claim 9, wherein the write request includes write data, the at least one victim block is selected from the first memory region, and the memory controller is configured to, in response to the write request, primarily program the write data in the write block of the first memory region and secondarily program, in the second memory region, the write data primarily programmed in the first memory region.

11. The storage apparatus of claim 9, wherein the background operation includes at least one of a garbage collection operation and a read reclaim operation.

12. The storage apparatus of claim 9, wherein the first memory region supports a first program speed, and
the second memory region supports a second program speed slower than the first program speed.

13. The storage apparatus of claim 9, wherein the memory controller is configured to control the first memory region to operate to store n-bit data in one memory cell, where n is a natural number greater than or equal to 1, and to control the second memory region to operate to store k-bit data in one memory cell, where k is a natural number greater than or equal to 2.

14. An operating method of a memory controller which controls a storage medium including a first memory region and a second memory region, each of which has a plurality of memory blocks, the method comprising:
determining an open block in the second memory region when a background operation is triggered;
moving data of at least one victim block to the determined open block, the at least one victim block selected from at least one of the first memory region and the second memory region;
converting the open block into a closed state;
erasing the at least one victim block to generate at least one free block; and
providing the at least one free block as a write block in response to a write request.

15. The method of claim 14, wherein the write request includes write data, and the at least one victim block is selected from the first memory region,
further comprising, in response to the write request, primarily programming the write data in the write block of the first memory region; and
secondarily programming, in the second memory region, the write data primarily programmed in the first memory region.

16. The method of claim 14, wherein the background operation includes at least one of a garbage collection operation and a read reclaim operation.

17. The method of claim 14, wherein the first memory region is operated to store n-bit data in one memory cell, where n is a natural number greater than or equal to 1, and the second memory region is operated to store k-bit data in one memory cell, where k is a natural number greater than or equal to 2.

18. The memory controller of claim 6, wherein the first memory region supports a first program speed, and
the second memory region supports a second program speed slower than the first program speed.

19. The method of claim 14, wherein the first memory region supports a first program speed, and
the second memory region supports a second program speed slower than the first program speed.
